# FASCICULE DE BREVET EUROPEEN

(11) **EP 0 456 538 B1**
(45) Date de publication et mention de la délivrance du brevet: **19.01.1994**
(21) Numéro de dépôt: 91401011.1
(22) Date de dépôt: 17.04.1991
(51) Int. Cl.: F16L 55/115, F16D 3/06

(54) **Dispositif d'obturation d'arbres d'entraînement à cannelures intérieures**
Dichtungssystem einer Antriebswelle mit inneren Rinnen
Seal arrangement for a drive shaft with inner splines

(30) Priorité: 19.04.1990 FR 9004990
(43) Date de publication de la demande: 13.11.1991
(73) Titulaire: HISPANO-SUIZA Société anonyme dite:, F-92213 Saint Cloud (FR)
(72) Inventeur: Mangas, Claude Raymond, F-78500 Sartrouville (FR)
(74) Mandataire: Moinat, François

(56) Documents cités:
- EP-A- 0 321 119
- FR-A- 2 393 191
- FR-A- 2 526 760
- GB-A- 580 318
- US-A- 2 650 484

## Description

La présente invention concerne un dispositif pour obturer la face d'extrémité d'un arbre creux à cannelures intérieures, ledit arbre creux présentant un logement tubulaire débouchant par une ouverture sur ladite face d'extrémité et des nervures intérieures qui s'étendent axialement entre deux plans transversaux P1 et P2, le plan P1 étant situé entre ladite face d'extrémité et le plan P2 comportant un manchon dont un tronçon est susceptible de s'adapter de façon étanche dans la partie dudit logement tubulaire située entre ladite face d'extrémité et le plan P1. Un tel dispositif est connu du document FR-A-2 526 760.

Les boîtiers d'engrenages en général, et les chaînes cinématiques utilisées en particulier sur moteurs aéronautiques pour entraîner les équipements, sont munis de prises de mouvement comportant un arbre creux à cannelures intérieures. La transmission du couple entre le boîtier et l'équipement s'effectue alors par les cannelures intérieures de cet arbre creux coopérant avec des cannelures extérieures prévues sur l'arbre d'entraînement de l'équipement.

Dans certaines applications, les prises de mouvement d'un boîtier ne sont pas systématiquement toutes utilisées.

Il est alors nécessaire d'obturer, de façon étanche, l'alésage de l'arbre de la prise de mouvement non équipée afin d'éviter une fuite d'huile du boîtier d'entraînement vers l'extérieur, en particulier lorsque les cannelures sont lubrifiées par une circulation d'huile à partir du boîtier.

Le but de la présente invention est de proposer un tel dispositif d'obturation qui permette d'éviter toute fuite d'huile, au travers des alésages des arbres, sur les prises de mouvement non utilisées et qui puisse être mis en place sans outillage particulier et avec verrouillage automatique en position montée.

Le but est atteint selon l'invention par le fait que l'autre tronçon du manchon comporte des cannelures extérieures susceptibles de coopérer avec les nervures intérieures dudit arbre pour empêcher la rotation dudit manchon par rapport audit arbre, ledit manchon présentant un alésage axial cylindrique, et que le dispositif comporte en outre un ensemble de verrouillage-déverrouillage comprenant une broche logeant de façon étanche dans l'alésage axial cylindrique dudit manchon, un bouton de manoeuvre fixé à l'extrémité externe de ladite broche et susceptible de recouvrir au moins partiellement la face d'extrémité dudit arbre, et un organe de verrouillage fixé à l'autre extrémité de ladite broche et susceptible de coulisser sans rotation le long des nervures intérieures dudit arbre et de se positionner au-delà du plan P2 pour être en butée contre les faces d'extrémités des nervures internes dudit arbre par suite d'un pivotement dudit ensemble de verrouillage-déverrouillage par rapport audit manchon,
des moyens permettant de limiter le pivotement dudit ensemble de verrouillage-déverrouillage par rapport audit manchon entre deux positions extrêmes : une première position, dite position de déverrouillage, dans laquelle ledit dispositif est susceptible de coulisser le long de l'axe dudit arbre, et une deuxième position, dite position de verrouillage, dans laquelle l'organe de verrouillage est en butée contre les faces d'extrémité desdites nervures intérieures s'étendant dans le plan P2, et
des moyens de verrouillage automatique de l'ensemble de verrouillage-déverrouillage lorsque le dispositif est correctement enfoncé à l'extrémité de l'arbre.

L'organe de verrouillage peut présenter, dans ses parties extérieures éloignées de l'axe de la broche, une configuration cannelée semblable à celle du tronçon cannelé du manchon dont les cannelures et nervures sont alignées avec les cannelures et nervures du manchon lorsque l'ensemble de verrouillage-déverrouillage est dans la position déverrouillée, lesdites nervures de l'organe de verrouillage étant au contraire dans l'alignement des cannelures du manchon lorsque l'ensemble de verrouillage-déverrouillage est dans la position verrouillée.

Le nombre de nervures de l'organe de verrouillage peut évidemment être inférieur au nombre de cannelures intérieures de l'arbre.

Avantageusement, le manchon s'étend entre le bouton de manoeuvre et l'organe de verrouillage.

Avantageusement, les moyens de verrouillage automatique de l'ensemble de verrouillage-déverrouillage comportent des moyens élastiques interposés entre le manchon et l'ensemble de verrouillage-déverrouillage et s'opposant à la force manuelle nécessaire pour tourner le bouton de manoeuvre de la position verrouillée vers la position déverrouillée.

Avantageusement lesdits moyens élastiques sont constitués par un ressort de torsion entourant ladite broche et dont les extrémités sont solidaires respectivement du manchon et de l'organe de verrouillage, le diamètre de l'alésage de la portion cannelée du manchon étant supérieure au diamètre de la broche pour permettre de loger ledit ressort de torsion.

La mise en place du dispositif est aisée. On présente le dispositif à travers l'ouverture de l'arbre creux en ayant pris soin de positionner correctement le manchon par rapport à l'ensemble de verrouillage-déverrouillage, ce dernier étant en position déverrouillée, on enfonce le dispositif dans le logement tubulaire. Lorsque l'organe de verrouillage franchit le plan P2, le ressort de torsion fait pivoter automatiquement l'ensemble de verrouillage-déverrouillage vers sa position de verrouillage. Le bouton de manoeuvre est alors en butée contre la face d'extrémité de l'arbre creux. Pour enlever le dispositif, il suffit de tourner manuellement le bouton de manoeuvre à l'encontre dudit ressort de torsion et de tirer le dispositif vers l'extérieur.

D'autres avantages et caractéristiques de l'invention apparaîtront à la lecture de la description faite en référence aux dessins annexés sur lesquels :

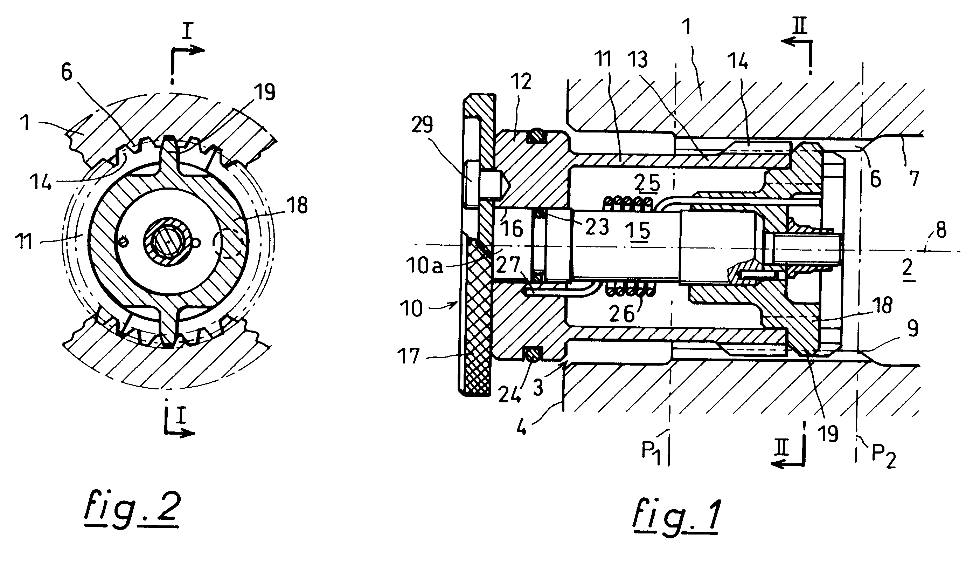

- la figure 1 montre une coupe longitudinale du dispositif de l'invention en cours de montage selon la ligne I-I de la figure 2,
- la figure 2 est une coupe transversale du même dispositif en cours de montage réalisée selon la ligne II-II de la figure 1,

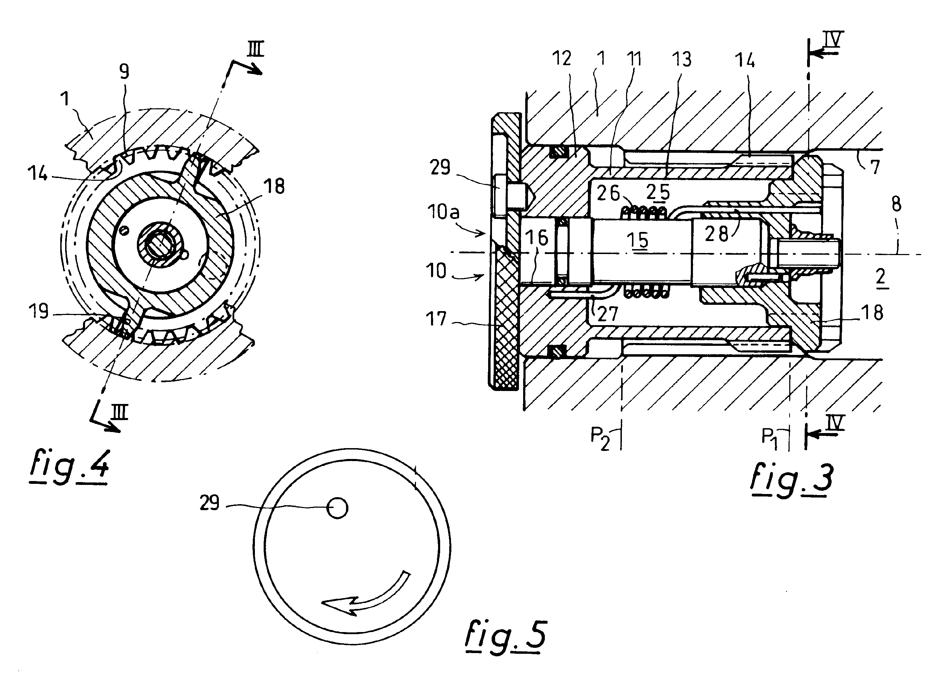

- la figure 3 est une coupe longitudinale du même dispositif monté et verrouillé, coupe selon la ligne III-III de la figure 4,
- la figure 4 est une coupe selon la ligne IV-IV de la figure 3, et
- la figure 5 est une vue de la face externe du dispositif.

Les figures représentent un arbre creux 1 de prise de mouvement issu d'un boîtier non représenté sur le dessin. Cet arbre creux 1 comporte un logement tubulaire 2 qui débouche par une ouverture 3 sur sa face d'extrémité 4. Il est de plus, muni de cannelures intérieures alternant avec des nervures intérieures 6 qui s'étendent entre deux plans transversaux P1 et P2. Le logement tubulaire 2 est, de préférence, délimité par une paroi cylindrique et circulaire 7 et les nervures intérieure sont en saillie sur cette paroi 7 et elles sont destinées à coopérer de manière connue avec les cannelures extérieures d'un arbre d'entraînement d'un équipement. Les plans P1 et P2 sont, de préférence, perpendiculaires à l'axe 8 de l'arbre 1 et les nervures intérieures 6 présentent des faces d'extrémité 9 qui s'étendent dans le plan P2. Un dispositif d'obturation 10 est prévu pour boucher de façon étanche l'ouverture 3 de manière à éviter les fuites d'huile provenant du boîtier lorsque ladite prise de mouvement n'est pas utilisée pour entraîner un équipement.

Le dispositif d'obturation 10 comprend un manchon 11 comportant, d'une part, un premier tronçon cylindrique 12 susceptible de s'emboîter de façon étanche dans la partie du logement tubulaire 2 située entre la face d'extrémité 4 et le plan P1, et comportant, d'une part, un deuxième tronçon cannelé 13 présentant des cannelures extérieures 14 susceptibles de coopérer avec les nervures intérieures 6 de l'arbre creux 1 de telle manière que le manchon 11 puisse coulisser sans rotation par rapport à l'arbre creux 1 qui l'entoure.

Le dispositif d'obturation 10 comprend de plus, un ensemble de verrouillage-déverrouillage 10a pourvu d'une broche 15 qui loge de façon étanche dans l'alésage axial 16 du manchon 11, un bouton de manoeuvre 17 fixé sur la face externe de la broche 15 et susceptible de recouvrir partiellement la face d'extrémité 4 dudit arbre 1, et un organe de verrouillage 18 fixé à l'autre extrémité de ladite broche 15 par des moyens connnus.

L'organe de verrouillage 18 présente sur son pourtour éloigné de l'axe 8 un contour dentelé semblable au contour de la portion cannelée 13 du manchon 11, de telle manière que cet organe de verrouillage 18 puisse coulisser dans la partie cannelée de l'arbre 1, et puisse venir en butée contre les faces d'extrémité 9 des nervures intérieures 6 de l'arbre creux 1 par suite de la rotation de l'ensemble de verrouillage-déverrouillage 10a autour de l'axe 8.

De préférence, la longueur du manchon 11 est sensiblement égale à la distance séparant la face d'extrémité 4 de l'arbre 1 du plan P2. Lorsque le dispositif d'obturation 10 est correctement enfoncé dans le logement tubulaire 2, le bouton de manoeuvre 17 est en appui contre la face d'extrémité 4 de l'arbre 1. La broche 15 et l'organe de verrouillage 18 sont dimensionnés de façon que la partie périphérique 19 de l'organe de verrouillage 18 soit alors située au-delà du plan P2, en regard des faces d'extrémité 9 des nervures intérieures 6.

Le bouton de manoeuvre 17 peut pivoter par rapport au manchon 11 entre deux positions extrêmes : une première position, dite position de déverrouillage, dans laquelle le dispositif d'obturation 10 peut être entré et sorti librement dans le logement tubulaire 2 et une deuxième position, dite position de verrouillage, dans laquelle le dispositif 10 mis en place est verrouillé.

Pour ce faire, le bouton de manoeuvre 17 est muni, par exemple, d'un téton qui loge dans une cavité sectorielle prévue en correspondance sur la face adjacente du manchon 11.

L'étanchéité est assurée par des joints 23 et 24 logeant respectivement dans des gorges ménagées dans les parois externes de la broche 15 et du tronçon cylindrique 12 du manchon 11.

Le diamètre de l'alésage axial 16 du manchon 11 est égal au diamètre de la broche 15 au droit du tronçon cylindrique 12, il est au contraire supérieur à celui de la broche 15 au niveau du tronçon cannelé 13. Il existe ainsi un espace annulaire 25 entre la broche 15 et le tronçon cannelé 13 du manchon 11.

Un ressort de torsion 26 dont une extrémité 27 est solidaire du manchon 11 et dont l'autre extrémité 28 est solidaire de l'organe de verrouillage 18 entoure la broche 15. Ce ressort de torsion 26 est disposé de manière à mettre automatiquement l'ensemble de verrouillage-déverrouillage 10a dans la position verrouillée lorsque le dispositif 10 est correctement enfoncé dans le logement tubulaire 2.

De nombreuses variantes peuvent être apportées à l'objet décrit ci-dessus sans sortir du cadre de l'invention. En particulier, les tronçons 12 et 13 du manchon peuvent être séparés par une portion centrale tubulaire qui serait écartée des parois de la broche 15 et du tube 1 pour diminuer les forces de frottement. Le nombre de cannelures 14 du tronçon cannelé 13 peut être inférieur au nombre de nervures intérieures 6 du tube creux 1. Il en est de même du nombre de nervures situées à la périphérie 19 de l'organe de verrouillage 18.

De manière à s'assurer que le dispositif d'obturation 10 est bien mis en place dans le logement tubulaire 2 et qu'il est bien verrouillé, il est prévu un témoin de verrouillage 29 formé par exemple par une ouverture traversant le bouton de manoeuvre 17 et débouchant sur la face externe du manchon 11 qui comporte une pastille colorée qui se trouve en regard de ladite ouverture lorsque le dispositif 10 est verrouillé.

## Revendications

1. Dispositif pour obturer la face d'extrémité (4) d'un arbre creux (1) à cannelures intérieures ledit arbre creux (1) présentant un logement tubulaire (2) débouchant par une ouverture (3) sur ladite face d'extrémité (4) et des nervures intérieures (6) qui s'étendent axialement entre deux plans transversaux P1 et P2, le plan P1 étant situé entre ladite face d'extrémité (4) et le plan P2,
comportant un manchon (11) dont un tronçon (12) est susceptible de s'emboîter de façon étanche dans la partie dudit logement tubulaire (2) située entre ladite face d'extrémité (4) et le plan P1 caractérisé en ce que l'autre tronçon (13) du manchon comporte des cannelures extérieures susceptibles de coopérer avec les nervures intérieures (6) dudit arbre (1) pour empêcher la rotation dudit manchon (11) par rapport audit arbre (1), ledit manchon (11) présentant un alésage axial cylindrique (16), et en ce qu'il comporte en outre
un ensemble de verrouillage-déverrouillage (10a) comprenant une broche (15) logeant de façon étanche dans l'alésage axial cylindrique (16) dudit manchon (11), un bouton de manoeuvre (17) fixé à l'extrémité externe de ladite broche (15) et susceptible de recouvrir au moins en partie la face d'extrémité (4) dudit arbre (1), et un organe de verrouillage (18) fixé à l'autre extrémité de ladite broche (15) et susceptible de coulisser sans rotation le long des nervures intérieures (6) dudit arbre (1) et de se positionner au-delà du plan P2 pour être en butée contre les faces d'extrémité (9) des nervures intérieures (6) dudit arbre (1) par suite d'un pivotement de l'ensemble de verrouillage-déverrouillage (10a) par rapport audit manchon (11),
des moyens permettant de limiter le pivotement dudit ensemble de verrouillage-déverrouillage (10a) par rapport audit manchon (11) entre deux positions extrêmes : une première position, dite position de déverrouillage, dans laquelle ledit dispositif (10) est susceptible de coulisser le long de l'axe dudit arbre (8), et une deuxième position, dite position de verrouillage, dans laquelle l'organe de verrouillage (18) est en butée contre les faces d'extrémité (9) desdites nervures internes (6), s'étendant dans le plan P2, et
des moyens de verrouillage automatique (26) de l'ensemble de verrouillage-déverrouillage (10a) lorsque le dispositif (10) est correctement enfoncé à l'extrémité de l'arbre (1).

2. Dispositif selon la revendication 1 caractérisé en ce que le manchon (11) s'étend entre le bouton de manoeuvre (17) et l'organe de verrouillage (18).

3. Dispositif selon l'une quelconque des revendications 1 et 2, caractérisé en ce que les moyens de verrouillage automatique de l'ensemble de verrouillage-déverrouillage (10a) comportent des moyens élastiques interposés entre le manchon (11) et l'ensemble de verrouillage-déverrouillage (10a) et s'opposant à la force manuelle nécessaire pour tourner le bouton de manoeuvre (17) de la position verrouillée vers la position déverrouillée.

4. Dispositif selon la revendication 3 caractérisé en ce que lesdits moyens élastiques comprennent un ressort de rappel.

5. Dispositif selon la revendication 4, caractérisé en ce que ledit ressort de rappel est un ressort de torsion (26) entourant ladite broche (15) et dont les extrémités (27, 28) sont solidaires respectivement du manchon (11) et de l'organe de verrouillage (18), le diamètre de l'alésage (16) du tronçon cannelé (13) du manchon (11) étant supérieur au diamètre de la broche (15) pour permettre de loger ledit ressort de torsion (26).

6. Dispositif selon l'une quelconque des revendications 1 à 5, caractérisé en ce qu'il comporte de plus un témoin de verrouillage (29).

## Patentansprüche

1. Vorrichtung zum Verschließen der Endseite (4) einer Hohlwelle (1) mit Innenrillen, wobei die genannte Hohlwelle (1) einen rohrförmigen Sitz (2), der in eine Öffnung (3) an der genannten Endseite (4) mündet, und Innenrippen (6), die axial zwischen zwei Querebenen P1 und P2 verlaufen, aufweist, wobei sich die Ebene P1 zwischen der genannten Endseite (4) und der Ebene P2 befindet, wobei die Vorrichtung eine Muffe (11) aufweist, von der ein Teilstück (12) dicht in den Teil des genannten rohrförmigen Sitzes (2), der sich zwischen der genannten Endseite (4) und der Ebene P1 befindet, eingepaßt werden kann,
dadurch gekennzeichnet, daß das andere Teilstück (13) der Muffe Außenrillen aufweist, die mit den Innenrippen (6) der genannten Welle (1) zusammenwirken können, um ein Drehen der genannten Muffe (11) zur genannten Welle (1) zu verhindern, wobei die genannte Muffe (11) eine zylindrische, axiale Bohrung (16) aufweist, und daß die Vorrichtung weiterhin eine Verriegelungs-Entriegelungsanordnung (10a), bestehend aus einem dicht in der zylindrischen, axialen Bohrung (16) der genannten Muffe (11) gelagerten Zapfen (15), einem am äußeren Ende des genannten Zapfens (15) befestigten Bedienknopf (17), der die Endseite (4) der genannten Welle (1) wenigstens zum Teil bedecken kann, und einem am anderen Ende des genannten Zapfens (15) befestigten Verriegelungsorgan (18), das ohne Drehung entlang der Innenrippen (6) der genannten Welle (1) gleiten und über die Ebene P2 hinausgelangen kann, um infolge einer Drehung der genannten Verriegelungs-Entriegelungsanordnung (10a) zu der genannten Muffe (11) in Anschlag an den Endseiten (9) der Innenrippen (6) der genannten Welle (1) zu liegen, sowie Mittel zum Begrenzen der Drehung der genannten Verriegelungs-Entriegelungsanordnung (10a) zur genannten Muffe (11) zwischen zwei Extrempositionen : einer ersten Position, genannt Entriegelungsposition, bei der die genannte Vorrichtung (10) entlang der Achse der genannten Welle (8) gleiten kann, und einer zweiten Position, genannt Verriegelungsposition, bei der sich das Verriegelungsorgan (18) in Anschlag an den Endseiten (9) der genannten Innenrippen (6), die in der Ebene P2 verlaufen, befindet, sowie Mittel zum automatischen Verriegeln der Verriegelungs-Entriegelungsanordnung (10a), wenn die Vorrichtung (10) korrekt am Ende der Welle (1) eingeführt wurde, aufweist.

2. Vorrichtung nach Anspruch 1, dadurch gekennzeichnet, daß sich die Muffe (11) zwischen dem Bedienknopf (17) und dem Verriegelungsorgan (18) erstreckt.

3. Vorrichtung nach einem der Ansprüche 1 und 2, dadurch gekennzeichnet, daß die Mittel zum automatischen Verriegeln der Verriegelungs-Entriegelungsanordnung (10a) aus federnden Mitteln bestehen, die zwischen der Muffe (11) und der Verriegelungs-Entriegelungsanordnung (10a) angeordnet werden und der von Hand ausgeübten Kraft entgegenwirken, die erforderlich ist, um den Bedienknopf (17) von der Verriegelungsposition zur Entriegelungsposition zu drehen.

4. Vorrichtung nach Anspruch 3, dadurch gekennzeichnet, daß die genannten federnden Mittel aus einer Rückholfeder bestehen.

5. Vorrichtung nach Anspruch 4, dadurch gekennzeichnet, daß die genannte Rückholfeder eine Verdrehungsfeder (26) ist, die den genannten Zapfen (15) umgibt und deren Enden (27, 28) fest mit der Muffe (11) bzw. mit dem Verriegelungsorgan (18) verbunden sind, wobei der Durchmesser der Bohrung (16) des gerillten Teilstücks (13) der Muffe (11) größer ist als der Durchmesser des Zapfens (15), damit er die genannte Verdrehungsfeder (26) aufnehmen kann.

6. Vorrichtung nach einem der Ansprüche 1 bis 5, dadurch gekennzeichnet, daß sie zudem einen Verriegelungsanzeiger (29) aufweist.

## Claims

1. Device for sealing off the end face (4) of a hollow shaft (1) with interior splines the said hollow shaft (1) presenting a tubular housing (2) opening out through an aperture (3) on the said end face (4) and interior spline ribs (6) which extend axially between two transverse planes P1 and P2, the said plane P1 being situated between the said end face (4) and the plane P2, comprising a sleeve (11) of which a portion (12) is capable of fitting snugly as a seal into the part of the said tubular housing (2) situated between the said end face (4) and the plane P1 characterised in that the other portion (13) of the sleeve comprises exterior grooves capable of operating in conjunction with the interior splines (6) of the said shaft (1) to prevent the said sleeve (11) from rotating in relation to the said shaft (1), the said sleeve (11) presenting a cylindrical axial bore (16), and in that it comprises in addition
a locking-unlocking assembly (10a) comprising a spigot (15) fitting snugly as a seal in the cylindrical axial bore (16) of the said sleeve (11), an operating knob (17) fixed to the outer end of the said spigot (15) and able to cover at least in part the end face (4) of the said shaft (1), and a locking member (18) fixed to the other end of the said spigot (15) and able to slide without rotating along the length of the interior splines (6) of the said shaft (1) and to position itself beyond the plane P2 to butt up against the end faces (9) of the interior splines (6) of the said shaft (1) following a rotating movement of the locking-unlocking assembly (10a) in relation to the said sleeve (11),
means permitting limited rotation of the said locking-unlocking assembly (10a) in relation to the said sleeve (11) between two extreme positions: a first position, called the unlocking position, in which the said device (10) is able to slide along the length of the axis of the said shaft (8), and a second position, called the locking position, in which the locking member (18) is butted up against the end faces (9) of the said interior splines (6) lying in the plane P2, and
means of automatic locking (26) the locking-unlocking assembly (10a) when the device (10) is properly pushed home to the end of the shaft (1).

2. Device in accordance with Claim 1, characterised in that the sleeve (11) extends between the operating knob (17) and the locking member (18).

3. Device in accordance with either of Claims 1 and 2, characterised in that the means of automatic locking of the locking-unlocking assembly (10a) comprise elastic means interposed between the sleeve (11) and the locking-unlocking assembly (10a) and opposing the manual force necessary to turn the operating knob (17) from the locked position to the unlocked position.

4. Device in accordance with Claim 3, characterised in that the said elastic means comprise a return spring.

5. Device in accordance with Claim 4, characterised in that the said return spring is a torsion spring (26) surrounding the said spigot (15) and of which the ends (27, 28) are fixed respectively to the sleeve (11) and the locking member (18), the diameter of the bore (16) of the grooved portion (13) of the sleeve (11) being greater than the diameter of the spigot (15) to allow the said torsion spring (26) to be accommodated.

6. Device in accordance with any of Claims 1 to 5, characterised in that it comprises in addition a locking tell-tale (29).
